# FASCICULE DE BREVET EUROPEEN

(11) **EP 1 580 477 B1**
(45) Date de publication et mention de la délivrance du brevet: **06.03.2013**
(21) Numéro de dépôt: 05290609.6
(22) Date de dépôt: 18.03.2005
(51) Int. Cl.: F16L 27/11, F04D 29/66, F04D 29/60, H05H 7/14

(54) **Raccord amortisseur pour pompe à vide**
Dämpfende Rohrverbindung für Vakuumpumpen
Damping connection for vacuum pump

(30) Priorité: 22.03.2004 FR 0450565
(43) Date de publication de la demande: 28.09.2005
(73) Titulaire: Adixen Vacuum Products, 74000 Annecy (FR)
(72) Inventeur: Vuillermoz, Jean-François, 74940 Annecy le Vieux (FR)
(74) Mandataire: Croonenbroek, Thomas Jakob

(56) Documents cités:
- WO-A-02/086325
- DE-A- 3 436 982
- DE-A- 10 001 509
- DE-U1- 7 805 710
- US-A- 4 523 612
- US-A- 4 862 697
- US-A- 5 775 737
- US-A- 6 065 780
- PATENT ABSTRACTS OF JAPAN vol. 0163, no. 84 (M-1296), 17 août 1992 (1992-08-17) & JP 04 125388 A (DAN KAGAKU:KK), 24 avril 1992 (1992-04-24)

## Description

L'invention concerne les lignes de génération de vide destinées à être utilisées dans les domaines dans lesquels les vibrations générées et transmises depuis la pompe à vide peuvent avoir une influence néfaste sur l'utilisation.

Parmi les nombreuses applications des pompes à vide, deux applications notamment sont susceptibles d'être sensibles aux vibrations émises par les pompes : la microscopie et la lithographie microélectronique.

L'invention vise plus particulièrement les applications des pompes à vide dans le domaine d'analyse dimensionnelle de la microscopie électronique, qui peut atteindre des résolutions de l'ordre du nanomètre. La moindre vibration est alors préjudiciable à l'observation. Mais de manière plus large, toutes les applications mettant en oeuvre des pompes à vide et ayant des contraintes vibratoires équivalentes sont concernées par l'invention.

Pour des raisons de coût et d'efficacité, notamment pour diminuer les canalisations reliant les pompes à vide aux chambres d'utilisation, les équipementiers cherchent à intégrer les pompes à vide directement sur les chambres d'utilisation ou à leur proximité immédiate.

Pour annihiler ou tout au moins diminuer fortement les vibrations générées par les pompes, on a déjà prévu des canalisations souples et amortissantes insérées entre la pompe à vide et la chambre d'utilisation. Ceci est particulièrement nécessaire pour les pompes turbomoléculaires munies de paliers à billes, dont la vitesse de rotation est très élevée, supérieure à trente mille tours par minute, et qui génèrent un niveau vibratoire significatif.

Une telle canalisation souple et amortissante connue, par exemple, du document DE 100 01 509 insérable entre deux brides de connexion, est sous forme d'un soufflet, tuyau flexible onduleux à ondes parallèles hautes pour donner une grande flexibilité. L'amortissement est procuré par un manchon élastomère cylindrique fendu dans son sens axial qui s'appuie sur les brides d'extrémités du soufflet et qui enveloppe la partie externe de celui-ci. Ainsi, on limite l'écrasement du soufflet quand le vide est fait à l'intérieur, et on garantit la souplesse de l'élément de raccordement ainsi qu'un amortissement de la transmission des vibrations d'une bride à l'autre.

Dans un montage conventionnel, la pompe à vide est montée flottante, suspendue à l'enceinte par la canalisation d'aspiration. Le soufflet cylindrique flexible amorti résiste au vide et soutient donc la masse de la pompe.

Mais dans les systèmes connus, un amortissement suffisant des vibrations nécessite de prévoir deux soufflets l'un après l'autre, séparés par une masse inertielle adaptée, réalisant un filtre à deux étages. Les coûts de production et de montage sont donc plus élevés, et l'encombrement axial global est sensiblement augmenté.

Pour réduire les vibrations émises par la pompe à vide elle-même, on peut utiliser comme pompe à vide une pompe turbomoléculaire connue à paliers magnétiques. Le principe des paliers magnétiques, donc sans contact et sans frottement entre masse en rotation et partie statique, supprime la plupart des vibrations émises par la pompe. Cependant il s'avère en général qu'un pic de vibrations peut être encore généré à une fréquence proche de celle de rotation de la pompe. Bien que ce pic de vibrations soit plus faible qu'avec les pompes à vide à paliers à billes, il est encore nécessaire d'utiliser un soufflet amorti double.

Les soufflets existants tels que ceux décrits, par exemple, dans le document US 4, 862, 697 sont en outre inadaptés à l'utilisation en toute sécurité de pompes turbomoléculaires dont les vitesses de rotation sont très élevées, et qui contiennent donc une énergie cinétique très importante qu'il faut dissiper en cas d'arrêt brutal accidentel de la pompe.

L'invention vise à éviter les inconvénients des systèmes de l'art antérieur, en particulier en permettant de réduire de façon très sensible les vibrations transmises à la chambre d'utilisation et provenant d'une pompe turbomoléculaire, que cette pompe soit montée suspendue à l'enceinte, ou qu'elle soit montée « flottante », tout en évitant le recours à une multiplicité de soufflets placés les uns après les autres.

Ainsi, on cherche à limiter les vibrations au moyen d'un seul soufflet amortisseur ayant une structure particulière, qui simultanément soit capable de supporter les efforts de rotation induits lors d'une décélération brutale accidentelle de la pompe turbomoléculaire nécessitant de dissiper une énergie importante.

L'idée essentielle de l'invention est de réaliser un soufflet à un seul étage qui amortisse efficacement les vibrations, grâce à un manchon élastomère amortisseur axial similaire à la configuration habituelle, mais associé en outre à des éléments amortisseurs engagés entre les ondes successives du soufflet selon sa face externe. La dureté des éléments amortisseurs est adaptée à l'amortissement recherché.

L'invention propose donc un raccord amortisseur pour ligne de vide selon la revendication 1.

Pour un diamètre intérieur égal, l'espace intérieur de l'unique soufflet présente ainsi une longueur réduite par rapport à une structure traditionnelle à deux ou plusieurs soufflets, ce qui améliore la vitesse de pompage tout en assurant un affaiblissement des vibrations transmises équivalant à celui d'un montage traditionnel à deux éléments standards.

L'élastomère amortisseur passif est engagé entre les ondes du soufflet est solidaire du manchon amortisseur.

En pratique, on peut avantageusement prévoir que l'élastomère amortisseur passif est d'une seule pièce avec le manchon amortisseur.

Entre deux ondes successives du soufflet flexible, l'élastomère amortisseur a, au repos, la forme d'une couronne circulaire dont le diamètre intérieur est radialement à l'écart du soufflet flexible.

L'usage possible d'un carter de pompe intégrant directement la fixation d'une bride spécifique du soufflet décrit permet d'optimiser encore mieux la performance de débit de la pompe en minimisant la longueur globale de la canalisation d'aspiration.

Selon un mode de réalisation avantageux, on prévoit en outre, en périphérie du soufflet, des chapes anti-rotation munies de patins en élastomère et qui entourent sans contact les griffes de fixation de la bride à l'enceinte dans l'usage normal de la pompe. Ces chapes diamétralement opposées, solidaires de la bride de fixation de pompe, sont bloquées en rotation par les griffes de fixation de la bride à l'enceinte et permettent de supporter les efforts de rotation éventuels lors d'une décélération brutale accidentelle de la pompe turbomoléculaire. On peut ainsi éviter de recourir à une fixation mécanique amortie par rapport au châssis de l'équipement.

En fonctionnement normal, une pression faible règne à l'intérieur du soufflet, les ondes sont donc comprimées. Par contre, en présence d'une pression atmosphérique à l'intérieur du soufflet, celui-ci reprend sa position initiale détendue. La suspension d'une masse comme celle d'une pompe à cet élément de canalisation peut provoquer une dilatation des ondes au-delà de cette position d'équilibre. Pour limiter cette dilatation, on peut prévoir, à l'intérieur de la canalisation, un dispositif de butées en traction fixées aux brides. Ce dispositif s'oppose à l'allongement axial du soufflet au-delà d'une valeur déterminée. En présence d'une faible pression interne, le contact des butées se trouve déconnecté et évite la transmission des vibrations.

La nouvelle structure de soufflet permet également d'utiliser une pompe turbomoléculaire de petit diamètre et de faible masse, qui peut être insérée en tout ou partie à l'intérieur d'un soufflet de taille équivalente. On réduit ainsi encore la longueur de canalisation, ce qui est favorable pour améliorer la vitesse de pompage de la pompe. L'encombrement axial et le volume global du dispositif sont donc réduits.

Dans le cas d'un montage en porte à faux, un élément spécifique de maintien fixé à la bride d'enceinte permet de retenir élastiquement la masse suspendue.

D'autres objets, caractéristiques et avantages de la présente invention ressortiront de la description suivante de modes de réalisation particuliers, faite en relation avec les figures jointes, parmi lesquelles :
- la figure 1 est une vue de face en coupe montrant une structure de raccord amortisseur passif selon un premier mode de réalisation de l'invention, associée à une pompe turbomoléculaire suspendue axialement en bout du raccord amortisseur ;
- la figure 2 est une vue de face en coupe montrant un raccord amortisseur à film actif selon un second mode de réalisation de l'invention, associé à une pompe turbomoléculaire suspendue axialement en bout du raccord amortisseur.
- la figure 3 est une vue de face en coupe d'un raccord amortisseur passif similaire de celui de la figure 1 mais comportant des moyens de butée en rotation ;
- la figure 4 est une vue de côté du raccord amortisseur de la figure 3 ;
- la figure 5 est une vue de face en coupe longitudinale d'une structure de raccord amortisseur passif selon un autre mode de réalisation, pour adaptation d'une pompe à l'intérieur du raccord amortisseur et orientée selon un axe horizontal ;
- la figure 6 illustre une structure de raccord amortisseur passif à pompe engagée dans le raccord amortisseur et orientée selon un axe vertical au-dessus de la chambre d'utilisation ;
- la figure 7 illustre une structure de raccord amortisseur à pompe intégrée à l'intérieur du raccord amortisseur et orientée selon un axe vertical au-dessous de la chambre d'utilisation ; et
- les figures 8 et 9 illustrent une autre structure de raccord amortisseur passif à pompe intégrée à l'intérieur du raccord amortisseur, selon un axe vertical et respectivement au-dessus ou au-dessous de la chambre d'utilisation, dans une réalisation à plus faible encombrement.

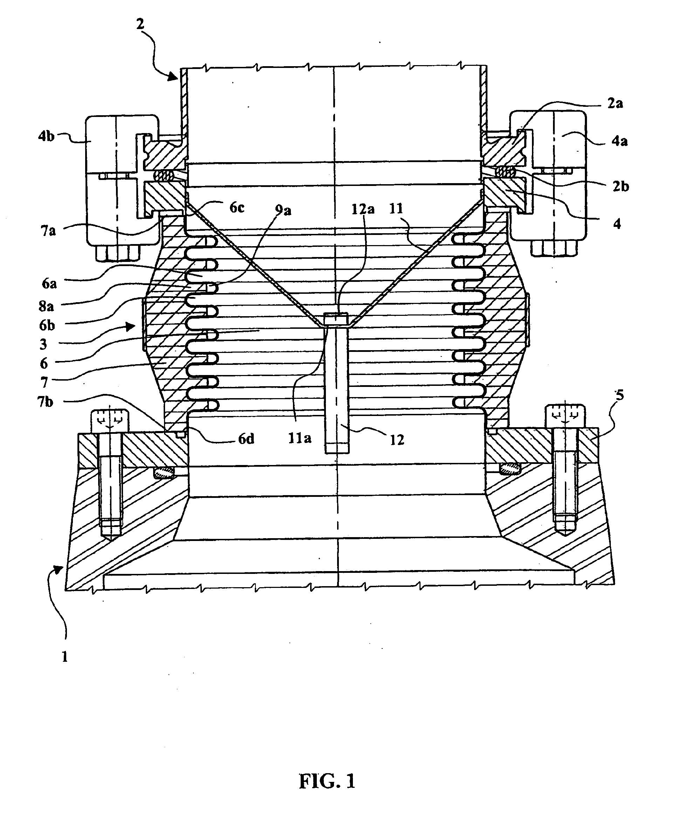

Dans le mode de réalisation illustré sur la figure 1, une pompe à vide 1 est suspendue à une chambre d'utilisation 2 par l'intermédiaire du raccord amortisseur 3.

Le raccord amortisseur 3 comprend essentiellement une bride annulaire d'entrée 4 et une bride annulaire de sortie 5 coaxiales et reliées l'une à l'autre par une fine paroi tubulaire coaxiale 6 ondulée destinée à conduire les gaz pompés depuis la chambre d'utilisation 2 jusqu'à la pompe à vide 1.

La bride annulaire d'entrée 4 est associée à des griffes de serrage telles que les griffes 4a et 4b diamétralement opposées, pour sa solidarisation axiale avec une bride 2a de raccordement de la chambre d'utilisation 2. Les brides 4 et 2a sont ainsi serrées l'une contre l'autre avec interposition d'un joint d'étanchéité 2b.

La paroi tubulaire coaxiale 6 a la forme d'un soufflet métallique flexible ondulé, ayant des excroissances radiales formant des ondes successives telles que les ondes 6a et 6b. Les extrémités 6c et 6d de la paroi tubulaire 6 sont solidaires respectivement de la bride d'entrée 4 et de la bride de sortie 5, par exemple par soudure.

La paroi tubulaire 6 en forme de soufflet flexible est entourée d'un manchon amortisseur 7 coaxial dont les extrémités 7a et 7b viennent en appui respectivement contre les brides d'entrée 4 et de sortie 5. Le manchon amortisseur 7 est en élastomère. De bons résultats sont obtenus en choisissant une dureté de 70 Shore environ.

Les ondes du soufflet flexible formant la paroi tubulaire 6 reçoivent, sur leurs faces externes, un élastomère amortisseur passif tel que l'élastomère 8a engagé entre les ondes adjacentes telles que les ondes 6a et 6b.

Dans la réalisation illustrée sur la figure 1, l'élastomère amortisseur passif 8a est d'une seule pièce avec le manchon amortisseur 7.

En alternative, on peut prévoir un élastomère amortisseur passif 8a sous forme d'une couronne circulaire, solidaire ou non du manchon amortisseur 7, et engagée entre les ondes successives 6a et 6b. On peut ainsi choisir un élastomère amortisseur passif 8a différent de l'élastomère constituant le manchon amortisseur 7, pour optimiser les propriétés globales d'amortissement du raccord amortisseur 3.

Comme on le comprendra sur la figure, un tel élastomère amortisseur passif 8a est engagé dans chacun des intervalles séparant deux ondes successives de la paroi tubulaire 6.

Toujours dans la réalisation illustrée sur la figure 1, entre les deux ondes successives 6a et 6b du soufflet flexible formant la paroi tubulaire 6, l'élastomère amortisseur 8a a, au repos, la forme d'une couronne circulaire dont le diamètre intérieur est radialement à l'écart du soufflet flexible, en laissant un espace annulaire 9a.

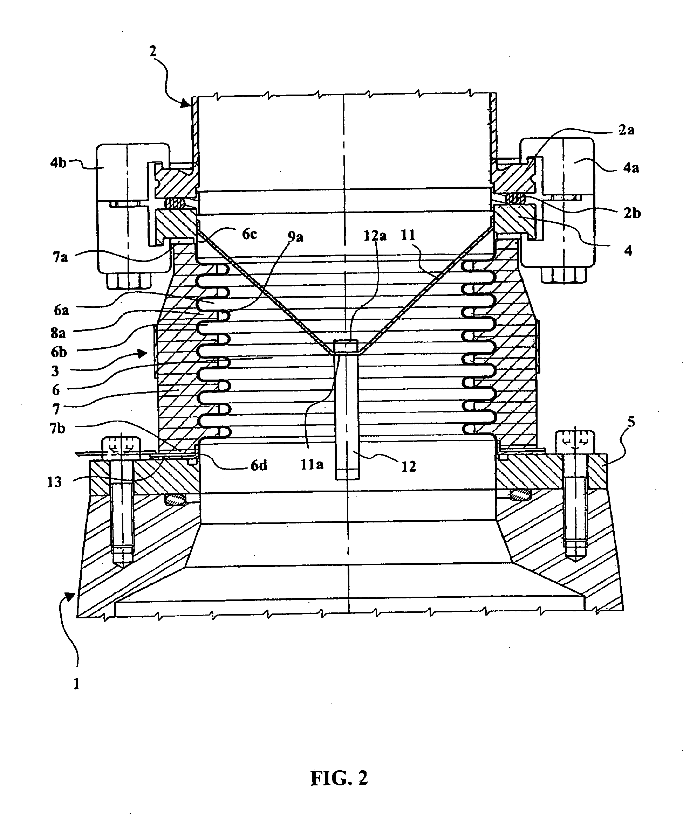

Dans le mode de réalisation de la figure 2, le manchon amortisseur 7 selon l'invention comprend en outre un dispositif actif de contrôle de vibrations, qui optimise l'amortissement des vibrations. On retrouve, sur cette figure, les mêmes éléments que dans le mode de réalisation de la figure 1, et ces mêmes éléments sont repérés par les mêmes références numériques. Dans ce cas, le dispositif actif de contrôle de vibrations comprend un film transversal piézoélectrique 13, engagé entre une extrémité 7b du manchon amortisseur 7 et la bride de sortie 5 qui assure le raccordement de la pompe à vide 1. Le film piézoélectrique 13 peut être alimenté par un dispositif de commande en fonction de signaux provenant soit d'un capteur de vibrations placé de façon appropriée, soit d'un dispositif de pilotage de paliers magnétiques de la pompe à vide 1, soit encore d'un dispositif d'alimentation du moteur d'entraînement de la pompe à vide 1.

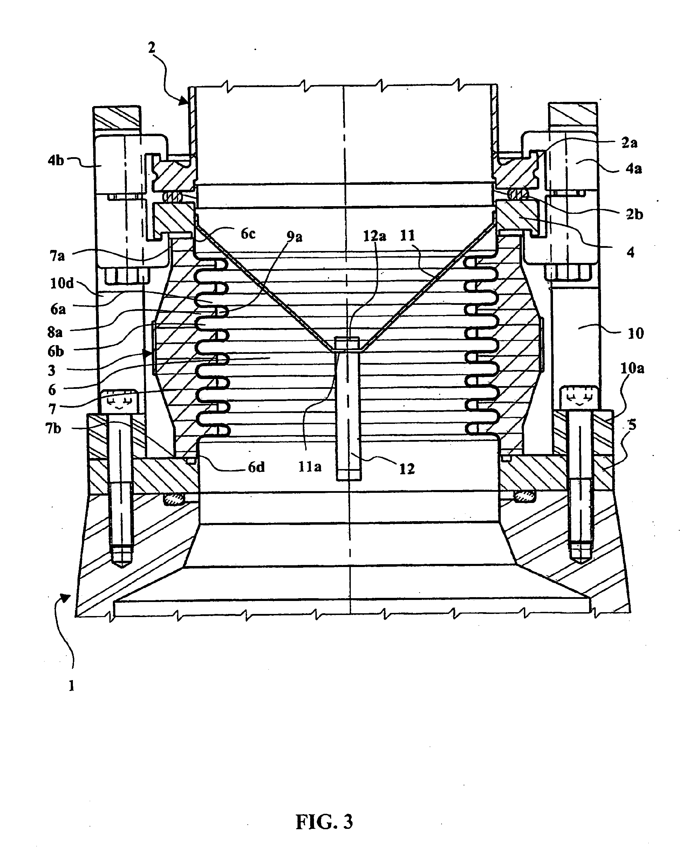

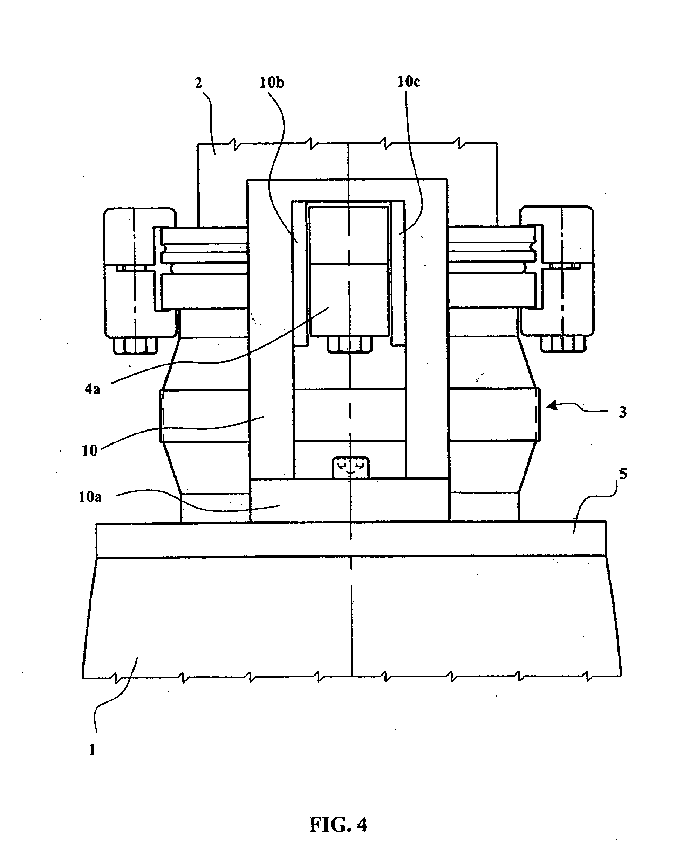

Dans le mode de réalisation illustré sur les figures 3 et 4, on retrouve les mêmes éléments que dans le mode de réalisation de la figure 1, et ces mêmes éléments sont repérés par les mêmes références numériques. On prévoit en outre, à l'extérieur de la paroi tubulaire 6, des moyens anti-rotation destinés à s'opposer à la rotation relative des brides d'entrée 4 et de sortie 5 au-delà d'un seuil de rotation déterminé.

Par exemple, les moyens anti-rotation peuvent comprendre au moins une chape anti-rotation 10, solidarisée à la bride de sortie 5 par une première extrémité 10a, et susceptible de s'engager avec une griffe de serrage 4a de la bride d'entrée 4 dans le cas d'une rotation relative entre la bride d'entrée 4 et la bride de sortie 5. Toutefois, en fonctionnement normal, la chape 10 est sans contact avec la griffe de serrage 4a de bride d'entrée 4, pour éviter la transmission de vibrations. On prévoit en outre, dans la chape anti-rotation 10, deux patins latéraux en élastomère 10b et 10c, mieux visibles sur la figure 4, et qui viennent former les surfaces d'appui de la chape anti-rotation 10 contre la griffe de serrage 4a en cas de rotation relative des brides d'entrée 4 et de sortie 5.

De préférence, les moyens anti-rotation comprennent au moins deux chapes anti-rotation 10 et 10d diamétralement opposées, pour assurer l'équilibrage des efforts de blocage en rotation.

La bride de sortie 5 et la bride d'entrée 4 sont en outre munies de moyens de butée de limitation d'écartement.

Ainsi, dans les modes de réalisation illustrés sur les figures 1 à 4, la bride d'entrée 4 comporte une arche d'entrée 11 diamétrale qui se développe dans l'espace intérieur du soufflet flexible formant la paroi tubulaire 6. De même, la bride de sortie 5 comporte une arche de sortie 12, diamétrale dans un plan perpendiculaire à celui de l'arche d'entrée 11, et se développant dans l'espace intérieur de la paroi tubulaire 6. Les deux arches 11 et 12 sont imbriquées, de façon que l'arche d'entrée 11 traverse l'arche de sortie 12 et réciproquement. En outre, en position d'utilisation normale, c'est-à-dire en présence d'un vide à l'intérieur du raccord amortisseur, par l'effet de la compression exercée par la pression atmosphérique externe, les brides 4 et 5 sont relativement rapprochées l'une de l'autre, et dans cet état les sommets 11 a et 12a des deux arches 11 et 12 sont à l'écart l'un de l'autre, comme illustré sur la figure 1. On comprendra que, en l'absence d'un vide intérieur, les brides 4 et 5 tendent à s'écarter sous l'effet du poids de la pompe à vide 1, mais les sommets 11 a et 12a des arches 11 et 12 viennent alors en appui l'un contre l'autre et interdisent l'écartement des brides 4 et 5 au-delà d'une valeur déterminée. Les arches 11 et 12 constituent ainsi les moyens de butée de limitation d'écartement.

Dans les modes de réalisation des figures 1 à 4, l'invention prévoit une ligne de vide comprenant un raccord amortisseur 3 inséré dans une canalisation de vide entre la pompe à vide 1 et une chambre d'utilisation 2.

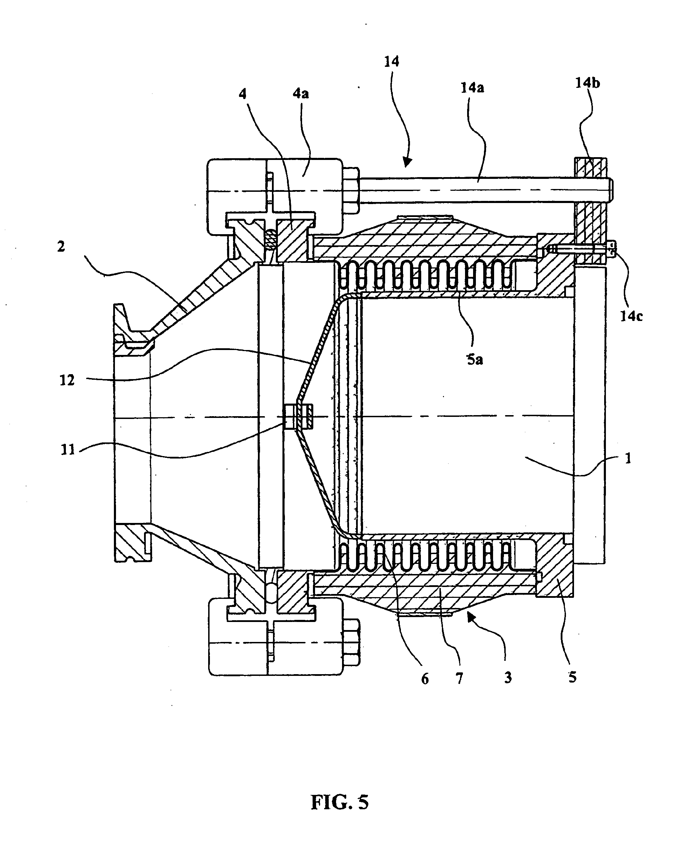

On considérera maintenant les modes de réalisation illustrés sur les figures 5 à 7.

On retrouve, sur ces figures 5 à 7, les mêmes éléments que dans le mode de réalisation précédent de la figure 1, et ces mêmes éléments sont repérés par les mêmes références numériques.

Une différence réside dans le fait que, dans ces modes de réalisation des figures 5 à 7, la pompe à vide 1 est de petite taille et est engagée en tout ou partie à l'intérieur même du soufflet flexible formant la paroi tubulaire 6. On réduit ainsi la dimension totale de l'ensemble, et surtout on réduit encore le volume pompé.

Pour l'insertion de la pompe 1, l'arche d'entrée 11 a une hauteur réduite et ne pénètre pas à l'intérieur de la paroi tubulaire 6.

Par contre, l'arche de sortie 12 a une hauteur plus grande, en ce sens qu'elle se raccorde à la bride de sortie 5 par un moyen d'extension axiale constitué par un carter d'insertion 5a formé par une excroissance tubulaire coaxiale de la bride de sortie 5 à l'intérieur de la paroi tubulaire 6. Le carter d'insertion 5a est destiné à recevoir la pompe 1, selon pratiquement toute la longueur de la paroi tubulaire 6. L'arche de sortie 12 se développe ensuite radialement, depuis l'extrémité amont du carter d'insertion 5a, pour s'entrecroiser avec l'arche d'entrée 11.

Dans le mode de réalisation de la figure 5, on prévoit en outre un dispositif de suspension 14 permettant le montage horizontal de l'ensemble, c'est-à-dire avec la pompe 1 orientée selon un axe de rotation horizontal. Le dispositif de suspension 14 comprend une tige supérieure horizontale 14a, fixée par sa première extrémité à la griffe de serrage 4a, et supportant par sa seconde extrémité un élément élastique 14b qui lui-même est fixé par une vis 14c à la bride de sortie 5. On comprend que le dispositif de suspension 14 permet de supporter le poids de la pompe 1, en porte à faux en sortie de la chambre d'utilisation 2.

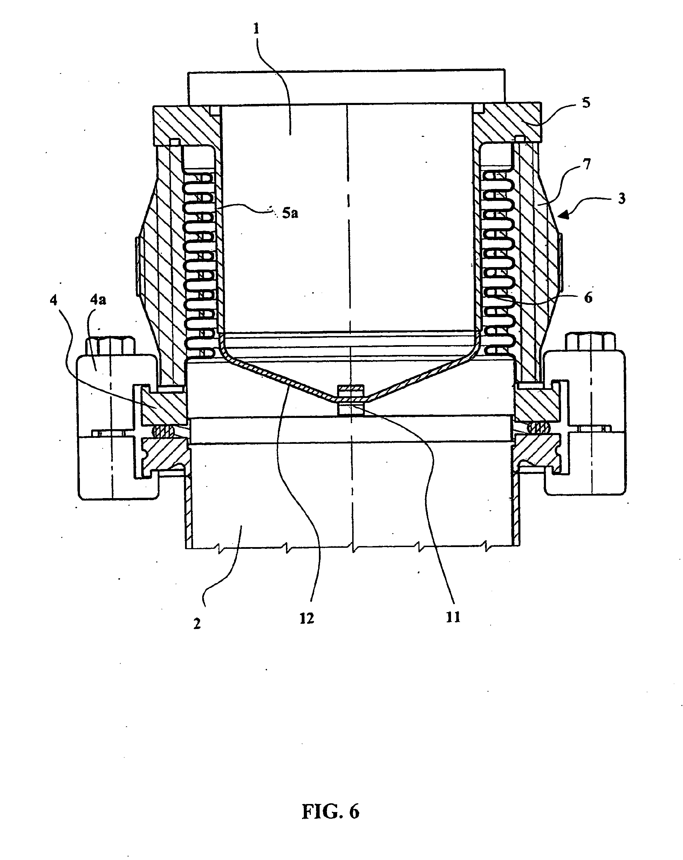

Dans le mode de réalisation de la figure 6, le dispositif comprend les mêmes éléments que dans le mode de réalisation de la figure 5, à l'exception de la présence d'un dispositif de suspension 14. En effet, dans ce cas, la pompe est orientée verticalement, au-dessus de la chambre d'utilisation 2, et ne nécessite pas de dispositif latéral de suspension.

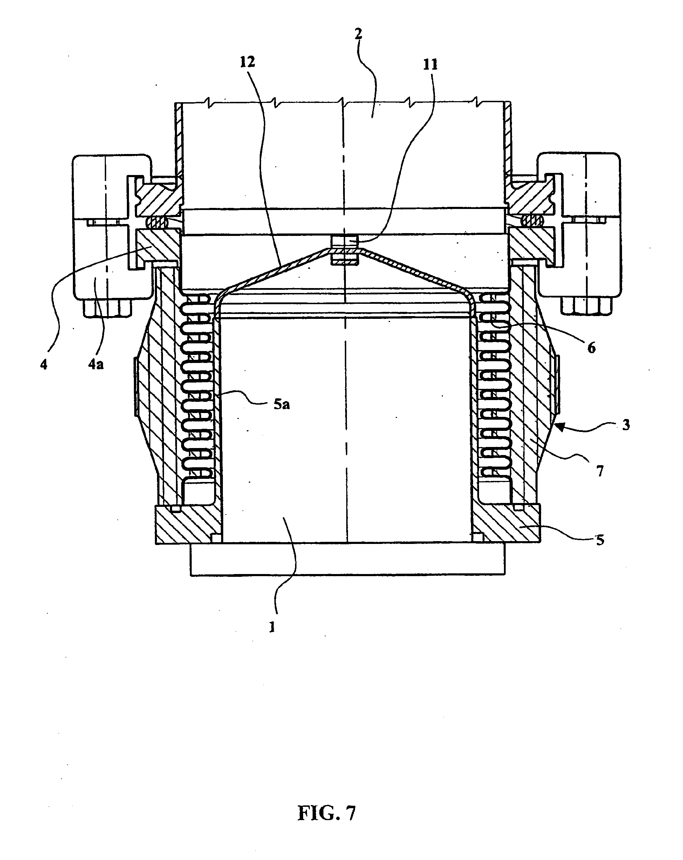

Dans le mode de réalisation de la figure 7, on reprend les mêmes moyens que dans le mode de réalisation de la figure 6, mais la pompe 1 est soutenue au-dessous de la chambre d'utilisation 2.

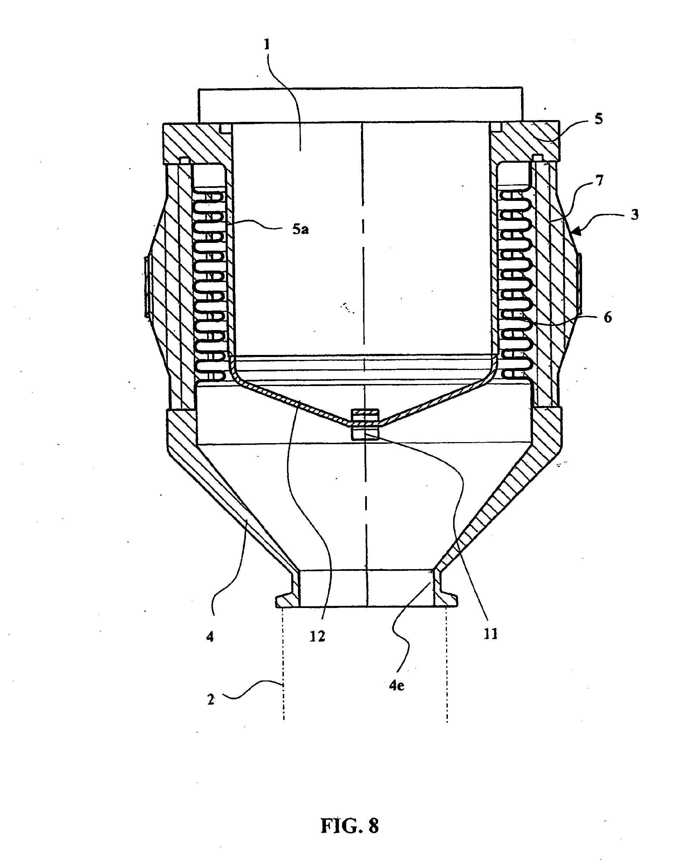

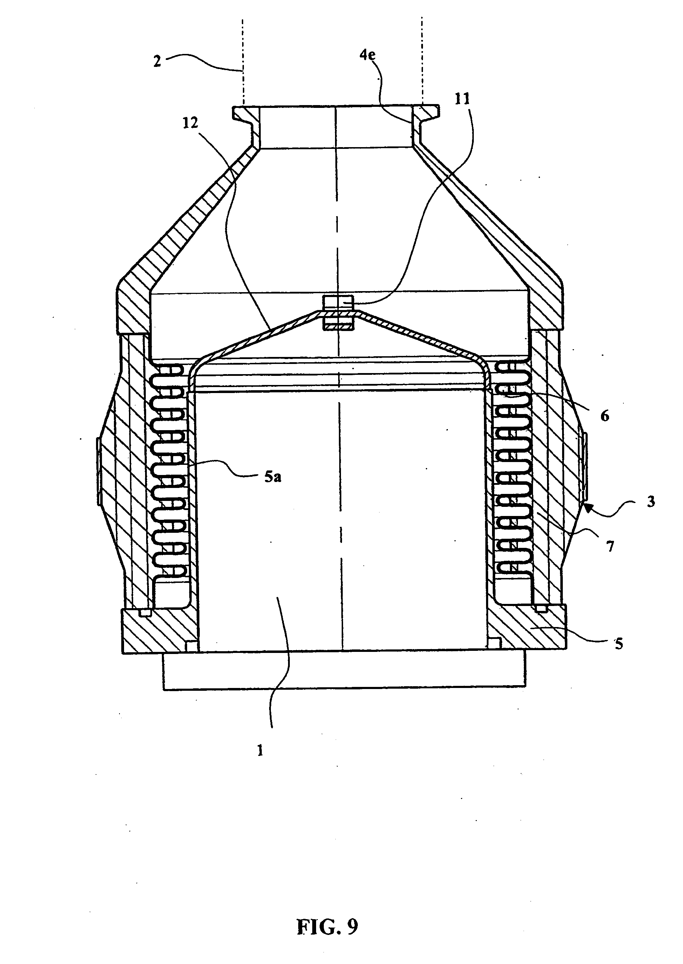

Les modes de réalisation des figures 8 et 9 concernent une structure d'encombrement encore réduit. On retrouve les mêmes éléments que dans les modes de réalisation précédents des figures 5 à 7, avec une pompe engagée à l'intérieur de la paroi tubulaire 6, mais cette fois il n'y a pas de griffe de serrage pour fixer la bride d'entrée 4 sur la chambre d'utilisation 2. Dans ce cas, la bride d'entrée 4 est conformée avec une réduction progressive, par exemple conique, et la fixation sur la chambre d'utilisation 2 se fait selon un diamètre réduit 4e. Une telle structure est adaptée pour des utilisations dans des emplacements de volume réduit, par exemple le long d'une colonne de microscopie électronique, ou avec des instrumentations de chambre à volume réduit, en préservant la performance de la pompe.

Les essais réalisés avec ces structures de raccord amortisseur ont permis d'obtenir un gain en amortissement d'environ 4,4 en vibration radiale, et 1,9 en vibration axiale.

## Revendications

1. Raccord amortisseur (3) pour ligne de vide, insérable dans une canalisation d'aspiration entre une chambre d'utilisation (2) et une pompe à vide turbomoléculaire (1), le raccord comprenant une paroi tubulaire (6) de canalisation, sous forme d'un soufflet flexible ayant des excroissances radiales formant des ondes, à deux extrémités et entourée d'un manchon amortisseur (7), dans lequel
- une bride annulaire d'entrée (4) et une bride annulaire de sortie (5) sont solidaires respectivement de chacune des extrémités de la paroi tubulaire (6),
- le manchon (7) est en appui contre la bride annulaire d'entrée (4) et la bride annulaire de sortie (5), **caractérisé en ce que** les ondes du soufflet flexible reçoivent, sur leurs faces externes,
- un élastomère amortisseur passif (8a) engagé entre lesdites ondes, ledit élastomère amortisseur étant solidaire du manchon amortisseur (7) et, entre deux ondes successives, ayant au repos la forme d'une couronne circulaire dont le diamètre intérieur est radialement à l'écart du soufflet flexible.

2. Raccord amortisseur (3) selon la revendication 1, dans lequel l'élastomère amortisseur passif (8a) est d'une seule pièce avec le manchon amortisseur (7).

3. Raccord amortisseur (3) selon l'une des revendications 1 ou 2, dans lequel des chapes anti-rotation (10, 10d) diamétralement opposées sont disposées en périphérie du soufflet pour supporter les efforts de rotation relatifs entre la pompe à vide (1) et la chambre d'utilisation (2) mais sans assurer de contact en usage normal.

4. Raccord amortisseur (3) selon l'une des revendications 1 à 3, dans lequel le manchon amortisseur (7) comprend en outre un dispositif actif de contrôle de vibrations (13), qui optimise l'amortissement des vibrations.

5. Raccord amortisseur (3) selon la revendication 4, dans lequel le dispositif actif de contrôle de vibrations comprend un film transversal piézoélectrique (13), engagé entre une extrémité (7b) du manchon amortisseur (7) et une bride de raccordement de la pompe à vide (1), et alimenté par un dispositif de commande en fonction de signaux provenant d'un capteur de vibrations approprié, ou provenant d'un dispositif de pilotage de paliers magnétiques de la pompe à vide (1), ou provenant d'un dispositif d'alimentation du moteur d'entraînement de la pompe à vide (1).

6. Ligne de vide comprenant un raccord amortisseur (3) selon l'une des revendications 1 à 5, inséré dans une canalisation de vide entre une pompe à vide turbomoléculaire (1) et une chambre d'utilisation (2).

7. Ligne de vide selon la revendication 6, dans laquelle la pompe à vide (1) est engagée au moins en partie à l'intérieur du soufflet flexible formant la paroi tubulaire (6).

## Claims

1. Damping coupling (3) for vacuum line, which can be inserted in a suction duct between a usage chamber (2) and a turbomolecular vacuum pump (1), the coupling comprising a tubular duct wall (6), in the form of a flexible bellows having radial protuberances forming waves, at two ends and surrounded by a damping sleeve (7), in which
- an annular inlet flange (4) and an annular outlet flange (5) are securely attached respectively to each of the ends of the tubular wall (6),
- the sleeve (7) bears against the annular inlet flange (4) and the annular outlet flange (5), **characterized in that** the waves of the flexible bellows receive, on their external faces,
- a passive damping elastomer (8a) fitted between said waves, said damping elastomer being securely attached to the damping sleeve (7) and, between two successive waves, having, when idle, the form of a circular ring whose internal diameter is radially separate from the flexible bellows.

2. Damping coupling (3) according to Claim 1, in which the passive damping elastomer (8a) is of a single piece with the damping sleeve (7).

3. Damping coupling (3) according to one of Claims 1 or 2, in which diametrically opposed anti-rotation caps (10, 10d) are arranged on the periphery of the bellows to support the relative rotation forces between the vacuum pump (1) and the usage chamber (2) but without ensuring contact in normal use.

4. Damping coupling (3) according to one of Claims 1 to 3, in which the damping sleeve (7) also comprises an active vibration monitoring device (13), which optimizes the damping of the vibrations.

5. Damping coupling (3) according to Claim 4, in which the active vibration monitoring device comprises a piezoelectric transversal film (13), fitted between one end (7b) of the damping sleeve (7) and a coupling flange of the vacuum pump (1), and powered by a control device according to signals originating from an appropriate vibration sensor, or originating from a magnetic bearing control device of the vacuum pump (1) or originating from a device powering the drive motor of the vacuum pump (1).

6. Vacuum line comprising a damping coupling (3) according to one of Claims 1 to 5, inserted in a vacuum duct between a turbomolecular vacuum pump (1) and a usage chamber (2).

7. Vacuum line according to Claim 6, in which the vacuum pump (1) is fitted at least partly inside the flexible bellows forming the tubular wall (6).

## Patentansprüche

1. Dämpfende Verbindung (3) für Vakuumleitung, die in eine Ansaugkanalisation zwischen einer Nutzungskammer (2) und einer Turbomolekular-Vakuumpumpe (1) eingefügt werden kann, wobei die Verbindung eine röhrenförmige Kanalisationswand (6) in Form eines biegsamen Balgs aufweist, der radiale Ausstülpungen hat, die Wellen bilden, an zwei Enden und umgeben von einem Dämpfstutzen (7), wobei
- ein ringförmiger Eingangsflansch (4) und ein ringförmiger Ausgangsflansch (5) jeweils fest mit einem der Enden der röhrenförmigen Wand (6) verbunden sind,
- der Stutzen (7) gegen den ringförmigen Eingangsflansch (4) und den ringförmigen Ausgangsflansch (5) anliegt, **dadurch gekennzeichnet, dass** die Wellen des biegsamen Balgs auf ihren externen Seiten Folgendes aufnehmen:
- ein passives Dämpfelastomer (8a), das zwischen die Wellen eingefügt ist, wobei das Dämpfelastomer fest mit dem Dämpfstutzen (7) verbunden ist und zwischen zwei aufeinanderfolgenden Wellen im Ruhezustand die Form eines kreisförmigen Kranzes hat, dessen Innendurchmesser radial von dem biegsamen Balg beabstandet ist.

2. Dämpfende Verbindung (3) nach Anspruch 1, bei der das passive Dämpfelastomer (8a) aus einem einzigen Stück mit dem Dämpfstutzen (7) besteht.

3. Dämpfende Verbindung (3) nach einem der Ansprüche 1 oder 2, bei der diametral entgegengesetzte Drehschutzgabeln (10, 10d) am Umfang des Balgs angeordnet sind, um die relativen Rotationskräfte zwischen der Vakuumpumpe (1) und der Nutzungskammer (2) zu tragen, aber ohne eine Berührung bei der normalen Nutzung sicherzustellen.

4. Dämpfende Verbindung (3) nach einem der Ansprüche 1 bis 3, wobei der Dämpfstutzen (7) ferner eine aktive Vorrichtung (13) zum Steuern von Schwingungen aufweist, die die Dämpfung der Schwingungen optimiert.

5. Dämpfende Verbindung (3) nach Anspruch 4, bei der die aktive Vorrichtung zum Steuern von Schwingungen eine piezoelektrische Querfolie (13) aufweist, die zwischen ein Ende (7b) des Dämpfstutzens (7) und einen Anschlussflansch der Vakuumpumpe (1) eingefügt ist und von einer Steuervorrichtung in Abhängigkeit von Signalen versorgt wird, die von einem entsprechenden Schwingungssensor kommen oder von einer Steuervorrichtung von Magnetlagern der Vakuumpumpe (1) kommen oder von einer Versorgungsvorrichtung des Antriebsmotors der Vakuumpumpe (1) kommen.

6. Vakuumleitung, die eine dämpfende Verbindung (3) nach einem der Ansprüche 1 bis 5 in eine Vakuumkanalisation zwischen einer Turbomolekular-Vakuumpumpe (1) und einer Nutzungskammer (2) eingefügt aufweist.

7. Vakuumleitung nach Anspruch 6, bei der die Vakuumpumpe (1) wenigstens teilweise in das Innere des biegsamen Balgs, der die röhrenförmige Wand (6) bildet, eingefügt ist.
